# EUROPEAN PATENT APPLICATION

(11) **EP 4 579 222 A1**
(43) Date of publication of application: **02.07.2025**
(21) Application number: 24222701.5
(22) Date of filing: 23.12.2024
(51) Int. Cl.: G01N 21/82, G01N 21/27, G01N 35/00, G01N 21/25, G01N 21/31

(54) **SAMPLE ANALYSIS SYSTEM AND SAMPLE ANALYSIS METHOD**

(30) Priority: 27.12.2023 CN 202311833928; 22.11.2024 CN 202411694711
(71) Applicant: Shenzhen Mindray Bio-Medical Electronics Co., Ltd., Shenzhen, Guangdong 518057 (CN)
(72) Inventor: LIU, Youlin, Shenzhen 518057 (CN); DAI, Yong, Shenzhen 518057 (CN); LIU, Yang, Shenzhen 518057 (CN); FANG, Tao, Shenzhen 518057 (CN); ZHOU, Lihua, Shenzhen 518057 (CN)
(74) Representative: KIPA AB

(57) **Abstract**

In the sample analysis system and the sample analysis method provided in embodiments of the invention, an image acquisition device may obtain a sample image of a to-be-detected sample, an optical detection device may obtain photoelectric data of a reaction solution prepared from the to-be-detected sample, a control device may obtain state information of the to-be-detected sample by analyzing the sample image, obtain state information of the reaction solution by analyzing the photoelectric data of the reaction solution, and determine a specific interferent information based on a combination of the two types of state information, thereby providing a basis for removing interferences and further improving accuracy of a detection result of the sample.

## Description

### CROSS-REFERENCE TO RELATED APPLICATION

This application claims priority to Chinese patent application No. 202311833928.3 filed to China National Intellectual Property Administration (CNIPA) on December 27, 2023 and entitled "SAMPLE ANALYSIS SYSTEM AND SAMPLE ANALYSIS METHOD".

### TECHNICAL FIELD

The invention relates to the technical field of medical devices, and more particularly to a sample analysis system and a sample analysis method.

### BACKGROUND

A sample analysis system such as a biochemical analyzer or the like, is an instrument for analyzing and detecting samples. In general, a reaction solution is obtained by adding a reagent to the sample, and a detection result of the reaction solution in each detection item is detected in a certain way. However, in a clinical detection, interferences brought by a reaction process and a to-be-detected sample are very common, and these abnormal interferences may affect accuracy of the detection result.

### SUMMARY

In view of this, the invention provides a sample analysis system and a sample analysis method, to determine information about an interferent during the detection of the sample, and provide a basis for removing interferences, thereby improving the accuracy of the detection result of the sample.

According to a first aspect, an embodiment of the invention provides a sample analysis system. The sample analysis system includes a sample preparation device, a detection device, an image acquisition device, and a control device.

The sample preparation device is configured to prepare a reaction solution using at least a portion of a to-be-detected sample and a reaction reagent.

The detection device includes a light source component and an optical signal detector. The light source component is configured to generate an irradiation light, the irradiation light forms a first emission light after irradiating the reaction solution, and the optical signal detector acquires the first emission light to obtain photoelectric data.

The image acquisition device is configured to acquire a sample image of the to-be-detected sample.

The control device is configured to determine first state information of the to-be-detected sample based on the sample image of the to-be-detected sample, obtain second state information of the reaction solution and a detection result of a detection item for the to-be-detected sample based on the photoelectric data, and determine an interferent information in the reaction solution based on the first state information in combination with the second state information.

According to a second aspect, an embodiment of the invention provides a sample analysis system. The sample analysis system includes a sample preparation device, a detection device, an image acquisition device, and a control device.

The sample preparation device is configured to prepare a reaction solution using at least a portion of a to-be-detected sample and a reaction reagent.

The detection device includes a light source component and an optical signal detector. The light source component is configured to generate an irradiation light, the irradiation light forms a first emission light after irradiating the reaction solution, and the optical signal detector acquires the first emission light to obtain photoelectric data.

The image acquisition device is configured to acquire a sample image of the to-be-detected sample in a sample vessel.

The control device is configured to determine first state information of the to-be-detected sample based on the sample image of the to-be-detected sample, obtain second state information of the reaction solution based on the photoelectric data, correct the photoelectric data based on the first state information in combination with the second state information, and obtain a detection result of a detection item for the to-be-detected sample based on the corrected photoelectric data.

According to a third aspect, an embodiment of the invention provides a sample analysis system. The sample analysis system includes a sample preparation device, a detection device, and a control device.

The sample preparation device is configured to prepare a reaction solution using at least a portion of a to-be-detected sample and a reaction reagent.

The detection device is configured to detect the to-be-detected sample to obtain a first detection parameter, and detect the reaction solution to obtain a second detection parameter. The first detection parameter is different from the second detection parameter.

The control device is configured to: obtain first state information of the to-be-detected sample based on the first detection parameter; obtain second state information of the reaction solution based on the second detection parameter; and determine an interferent information in the reaction solution based on the first state information in combination with the second state information.

According to a fourth aspect, an embodiment of the invention provides a sample analysis system. The sample analysis system includes a sample preparation device, a detection device, an image acquisition device, and a control device.

The sample preparation device is configured to prepare a reaction solution using at least a portion of a to-be-detected sample in a sample tube and a reaction reagent.

The detection device includes a light source component and an optical signal detector. The light source component is configured to generate an irradiation light, the irradiation light forms a first emission light after irradiating the reaction solution, and the optical signal detector acquires the first emission light to obtain photoelectric data.

The image acquisition device is configured to acquire an image of the sample tube containing the to-be-detected sample.

The control device is configured to: obtain a first interferent information caused by the sample tube based on the image of the sample tube; obtain a second interferent information in the reaction solution and a detection result of a detection item for the to-be-detected sample based on the photoelectric data; and determine an interferent source in the detection item based on the first interferent information in combination with the second interferent information.

According to a fifth aspect, an embodiment of the invention provides a sample analysis method. The sample analysis method includes the following operations.

First state information of a to-be-detected sample is acquired.

Photoelectric data of a reaction solution prepared from the to-be-detected sample and a reagent is acquired, and second state information of the reaction solution is obtained based on the photoelectric data. The photoelectric data is obtained by acquiring an emission light after a light source irradiates the reaction solution.

An interferent information in the reaction solution is determined based on the first state information and the second state information; or, the photoelectric data of the reaction solution are corrected based on the first state information and the second state information, to obtain a detection result of a detection item.

According to a sixth aspect, an embodiment of the invention provides a sample analysis method. The sample analysis method includes the following operations.

A sample image of a to-be-detected sample is acquired.

The to-be-detected sample is processed to remove an interferent from the to-be-detected sample, when it is determined that the interferent is present in the to-be-detected sample based on the sample image of the to-be-detected sample.

A reaction solution is prepared from the processed to-be-detected sample and a reagent, and a detection result is obtained based on photoelectric data of the reaction solution. The photoelectric data is obtained by acquiring an emission light after a light source irradiates the reaction solution.

It can be seen from the above technical solutions that, in the sample analysis system and the sample analysis method provided in embodiments of the invention, on one hand, the state information of the to-be-detected sample may be obtained for the to-be-detected sample; on the other hand, the reaction solution may be prepared from the to-be-detected sample, and the state information of the reaction solution may be obtained based on the photoelectric data of the reaction solution, so that the interferent information in the reaction solution may be determined by the state information of the to-be-detected sample in combination with the state information of the reaction solution. Compared to a method for determining interferences by manually observing a state of the sample, the technical solution in each of the embodiments of the invention may eliminate an influence of subjective factors and provide more diverse and comprehensive information for determining the interferences, thereby providing a more reliable basis for removing the interferences and further improving an accuracy of the detection result of the sample.

### BRIEF DESCRIPTION OF THE DRAWINGS

In order to explain technical solutions in the related art or the embodiments of the invention more clearly, drawings required to be used in descriptions of the related art or the embodiments will be briefly introduced below. It is apparent that the drawings in the following descriptions are only some embodiments of the invention, and other drawings may also be obtained by those of ordinary skill in the art based on these drawings without paying any creative work.
FIG. 1 is a schematic structural diagram of a sample analysis system provided in an embodiment of the invention.
FIG. 2A and FIG. 2B are two exemplary diagrams of optical signal pulse waveforms provided in embodiments of the invention.
FIG. 3A is a schematic structural diagram of a single sample analysis device provided in an embodiment of the invention.
FIG. 3B is a schematic structural diagram of an assembly line system provided in an embodiment of the invention.
FIG. 4 is a schematic flowchart of self-updating of a second machine learning model provided in an embodiment of the invention.
FIG. 5 is a schematic flowchart of a sample analysis method provided in an embodiment of the invention.
FIG. 6A and FIG. 6B are two schematic flowcharts of correcting an item detection result provided in embodiments of the invention.
FIG. 7A is an exemplary diagram of a spectrum in case that no interference is present in a Creatine Kinase (CK) item provided in an embodiment of the invention.
FIG. 7B is an exemplary diagram of a spectrum in case that a hemolysis interference is present in a CK item provided in an embodiment of the invention.
FIG. 8A and FIG. 8B are two schematic flowcharts of redetecting a sample provided in embodiments of the invention.
FIG. 9 is a schematic flowchart of a sample analysis method provided in an embodiment of the invention.
FIG. 10 is a schematic flowchart of a sample analysis method provided in an embodiment of the invention.

### DETAILED DESCRIPTION

In a clinical detection of a sample, the sample itself or a reaction process is usually subject to interferences that can affect an accuracy of a detection item. The interferences may come from various sources including, but are not limited to: a high concentration of ambient CO₂ that changes an alkaline environment of the reaction, a physical hemolysis due to a physical collision during blood acquisition, lipemia due to an unregulated blood acquisition of a patient, etc. At present, the interferences are usually removed by manually observing the sample. However, such interference removal method is affected by subjective factors or makes determination based on a single factor, which results in an inaccurate determination of the interferences. If an interferent information cannot be determined, corresponding treatment measures cannot be taken to remove the interferences. Moreover, an improper abnormality treatment method not only cannot remove the interferences, but also may waste the reagent, affect a sample detection throughput and an overall efficiency, etc.

Embodiments of the invention provide a sample analysis system, which determines the interferent information by using an image of a to-be-detected sample in combination with photoelectric data of a reaction solution prepared from the to-be-detected sample, and provides an accurate basis for removing the interferences.

Hereinafter, technical solutions in the embodiments of the invention will be clearly and completely described with reference to drawings in the embodiments of the invention. It is apparent that the described embodiments are only a part of the embodiments of the invention, rather than all of the embodiments. Based on the embodiments in the invention, all other embodiments obtained by those of ordinary skill in the art without paying any creative work shall fall within the scope of protection of the invention.

An embodiment of the invention provides a sample analysis system, and the sample analysis system may include, but is not limited to any one of a biochemical analysis system and a coagulation analysis system. The sample analysis system includes a sample preparation device, a detection device, an image acquisition device, and a control device.

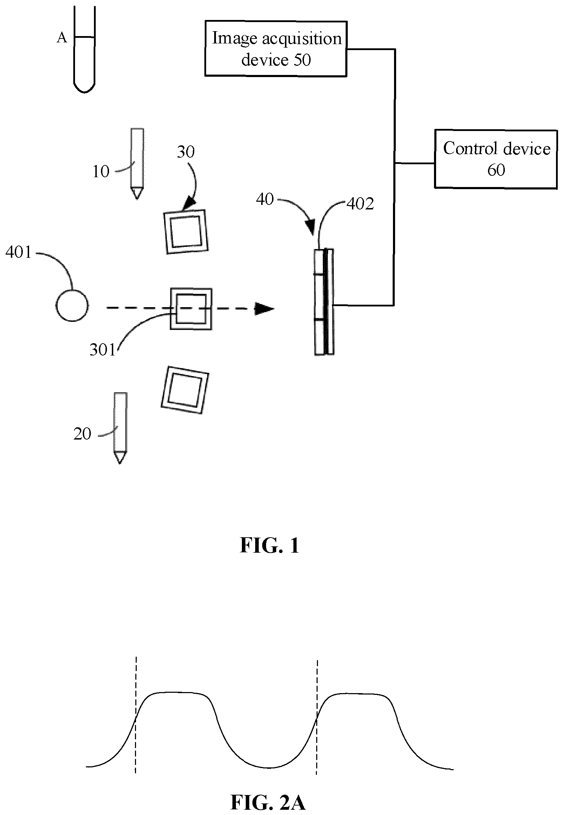

The sample preparation device is configured to prepare a reaction solution using at least a portion of a to-be-detected sample and a reaction reagent. With reference to a structural example of a sample analysis system provided in FIG. 1, the sample preparation device may include a sample dispensing mechanism 10, a reagent dispensing mechanism 20, and a reaction device 30.

The sample dispensing mechanism 10 is configured to dispense a portion of a to-be-detected sample in a sample vessel into a reaction vessel, and the to-be-detected sample may include, but is not limited to any one of a blood sample, a body fluid sample and a urine sample. In an implementation, the sample dispensing mechanism includes at least a sampling needle to aspirate the to-be-detected sample from the sample vessel and dispense the aspirated to-be-detected sample into the reaction vessel in the reaction device. For example, the sampling needle of the sample dispensing mechanism 10 in FIG. 1 aspirates a portion of the to-be-detected sample from a sample tube A and dispenses the portion of the to-be-detected sample into the reaction vessel 301. In an implementation, the sampling needle of the sample dispensing mechanism 10 performs a two-dimensional (2D) or three-dimensional (3D) movement in space through a 2D or 3D driving mechanism, to: move to aspirate the to-be-detected sample from the sample vessel, move onto the reaction vessel 301 to which the sample is added, and discharge the sample into the reaction vessel 301.

The reagent dispensing mechanism 20 is configured to dispense a reaction reagent into the reaction vessel. In an implementation, the reagent dispensing mechanism 20 may include a reagent needle, and the reagent needle performs a 2D or 3D movement in space through a 2D or 3D driving mechanism, to: move to aspirate the reagent carried by a reagent component, move onto the reaction vessel 301 to which the reagent is added, and discharge the reagent into the reaction vessel 301.

It should be noted that when the reaction solution is prepared in each of the embodiments of the invention, the order of dispensing the reagent and the to-be-detected sample into the reaction vessel is not limited, that is, the reagent may be dispensed into the reaction vessel and then the to-be-detected sample may be dispensed into the reaction vessel; or the to-be-detected sample may be dispensed into the reaction vessel and then the reagent may be dispensed into the reaction vessel.

The reaction device 30 is provided with at least one reaction site where the reaction vessel 301 carrying the reaction solution is arranged, and the reaction solution is prepared from the to-be-detected sample and the reagent. The reaction vessel is for example a reaction container, a reaction tank, etc. In an implementation, the reaction device 30 may be a reaction disk arranged in a disk-like structure and provided with one or more reaction sites where the reaction vessels are arranged. The reaction disk is rotatable and drives the reaction vessels in its reaction sites to rotate, to dispatch the reaction vessel within the reaction disk and incubate the reaction solution in the reaction vessel. In an implementation, the sample analysis system further includes a mixing mechanism configured to mix the reaction solution required to be mixed in the reaction vessel, to uniformly distribute substances in the reaction solution.

The detection device includes a light source component and an optical signal detector. The light source component is configured to generate an irradiation light, the irradiation light forms a first emission light after irradiating the reaction solution, and the optical signal detector acquires the first emission light to obtain photoelectric data. A structure of the detection device is shown in FIG. 1, the detection device 40 includes a light source component 401 and an optical signal detector 402, the light source component 401 is configured to generate an irradiation light, the irradiation light forms an emission light after irradiating the reaction solution in the reaction vessel 301, and the optical signal detector 402 acquires the emission light to obtain photoelectric data. The emission light may be referred to as the first emission light, to distinguish from an emission light of the reaction reagent. In an implementation, the optical signal detector 402 may be a photometer.

The reaction solution may be prepared after the reagent is mixed with the to-be-detected sample in the reaction vessel 301, and the photoelectric data obtained in this case are photoelectric data of the reaction solution. It should be noted that in some embodiments, in case that the to-be-detected sample is dispensed into the reaction vessel 301 while the reagent is not dispensed, the detection device 40 may acquire photoelectric data of the to-be-detected sample. In some other embodiments, in case that the reaction reagent is dispensed into the reaction vessel 301 while the to-be-detected sample is not dispensed, the detection device 40 may acquire photoelectric data of the reaction reagent, and the photoelectric data may be referred to as second photoelectric data.

The manner in which the detection device 40 obtains the photoelectric data may include various specific implementations.

In an implementation, the photoelectric data are acquired in full domain. When the reaction vessel is kept stationary relative to the light source component, the irradiation light generated by the light source component 401 forms the emission light after irradiating a same position of the reaction solution in the reaction vessel, the emission light includes at least two optical signals with different wavelengths, and the optical signal detector 402 converts the at least two optical signals with different wavelengths into the photoelectric data. For example, multiple optical signals with multiple wavelengths are simultaneously acquired in parallel, detection positions and time periods of the multiple wavelengths are the same, and the photoelectric data corresponding to the multiple wavelengths may be referenced to each other, for example, state information of the reaction solution may be obtained therefrom.

In another implementation, the photoelectric data are acquired in full time. The reaction vessel 301 moves relative to the light source component 401, the photoelectric data are acquired during continuous irradiation of the reaction vessel 402 by the light source component 401, and the photoelectric data include a signal sequence formed by relationships between acquisition moments and intensities of the at least two optical signals. In some implementations, the signal sequence may also be referred to as an optical signal pulse waveform, the signal sequence may be a graph formed by pulses and including intensities of optical signals and time information, and the signal sequence may also be a data array including correspondences between the intensities of optical signals and the time information.

During continuous irradiation of the same reaction vessel 402 by the light source component 401, photoelectric data corresponding to the wavelength are acquired in one or more detection periods. The photoelectric data corresponding to the wavelength include signal sequences in the one or more detection periods, and the signal sequence in each detection period includes at least two light intensity data corresponding to the wavelength. In an example shown FIG. 2A, the photoelectric data include signal sequences in two detection periods, and the signal sequence in each detection period is formed by correspondences between at least two light intensity signals and the acquisition moments.

In another specific implementation, the photoelectric data are acquired in full time and full domain, that is, it is a combination of the above two acquisition methods, and optical signals corresponding to at least two wavelengths are acquired in a full time period, to obtain photoelectric data. The photoelectric data obtained in this case may be signal sequences formed by relationships between intensities and acquisition moments of the optical signals corresponding to at least two wavelengths.

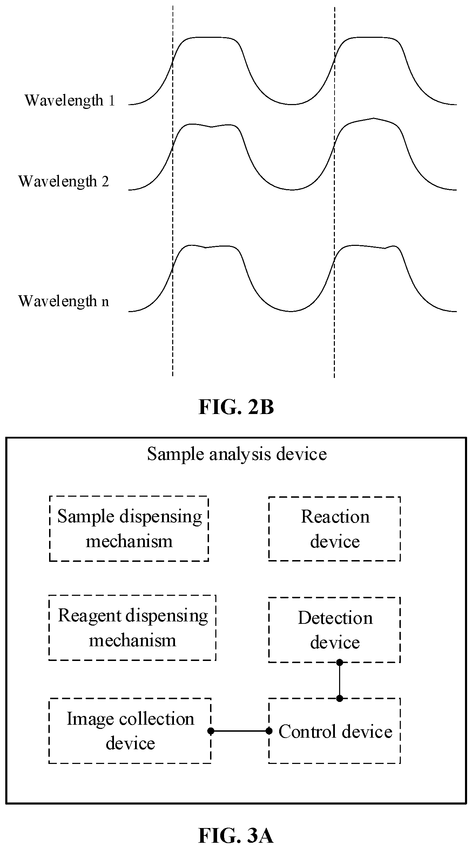

Specifically, during continuous irradiation of the same reaction vessel by the light source component, photoelectric data corresponding to n wavelengths are acquired in parallel in one or more detection periods, each photoelectric data corresponding to a respective wavelength include signal sequences in the one or more detection periods, and the signal sequence in each detection period includes at least two light intensity data corresponding to the wavelength. In an example shown in FIG. 2B, the detection device acquires full-time photoelectric data corresponding to multiple wavelengths in two detection periods of the reaction vessel in parallel, the photoelectric data include signal sequences corresponding to multiple wavelengths from wavelength 1 to wavelength n, and each signal sequence includes correspondences between intensities and acquisition moments of at least two optical signals. It may also be considered that optical signal pulse waveforms corresponding to multiple wavelengths are obtained in FIG. 2B.

In yet another specific implementation, the photoelectric data are acquired by using Panorama, Dynamic, Recognization (PDR) technology, that is, optical signals are dynamically acquired in full time period, full wavelength band and full reaction domain, to obtain the photoelectric data of the reaction solution. When the reaction vessel is kept stationary relative to the light source component, the irradiation light forms the first emission light after irradiating a same position of the reaction solution in the reaction vessel, the first emission light includes at least two optical signals with different wavelengths, the optical signal detector converts the at least two optical signals with different wavelengths into the photoelectric data, and the photoelectric data include signal sequences formed by relationships between acquisition moments and intensities of the at least two optical signals with different wavelengths. Furthermore, when the reaction vessel rotates relative to the light source component, the irradiation light forms the first emission light after continuous irradiation of the reaction solution in the reaction vessel, the first emission light includes at least two optical signals with different wavelengths, the optical signal detector converts the at least two optical signals with different wavelengths into the photoelectric data, and the photoelectric data include signal sequences formed by relationships between acquisition moments and intensities of the at least two optical signals with different wavelengths.

The image acquisition device 50 is configured to acquire a sample image of the to-be-detected sample in the sample vessel. In an actual application, the sample vessel may be understood as a transparent or translucent vessel for carrying the to-be-detected sample, an image obtained by photographing the sample vessel may reflect an appearance of the to-be-detected sample, and thus the image may be referred to as a sample image. For example, the image acquisition device 50 in FIG. 1 may acquire a sample image of the to-be-detected sample in the sample tube A.

In an implementation, the image acquisition device 50 may be a communication interface configured to receive the sample image photographed by a photographing device such as a camera. In another implementation, the image acquisition device may include an image collection device configured to photograph the sample image, such as a camera. Specifically, the image acquisition device may include a sample holder, a rotation device, and a camera. The sample holder is configured to carry the sample vessel, to keep the sample vessel in a vertical state. The rotation device is configured to drive the sample holder to rotate, to drive the sample vessel carried by the sample holder to rotate around a vertical central axis. The camera is configured to photograph sample images during the rotation of the sample vessel. In an actual application, a duration during which the camera photographs the sample vessel needs to be equal to or greater than a duration required by the sample vessel to rotate a cycle or 360 degrees, to ensure that the camera may obtain the sample images in the sample vessel from different photographing angles or viewpoints during the rotation of the sample vessel by one cycle. In some cases, the image acquisition device does not include the rotation device, and the camera may photograph a relatively stationary sample vessel to obtain the sample image.

As shown in FIG. 3A, in case that the image acquisition device includes an image collection device, the sample analysis system may include a single sample analysis device, and the image collection device is integrated into the sample analysis device. That is, the single sample analysis device may include a sample dispensing mechanism, a reagent dispensing mechanism, a reaction device, a detection device, an image collection device, and a control device.

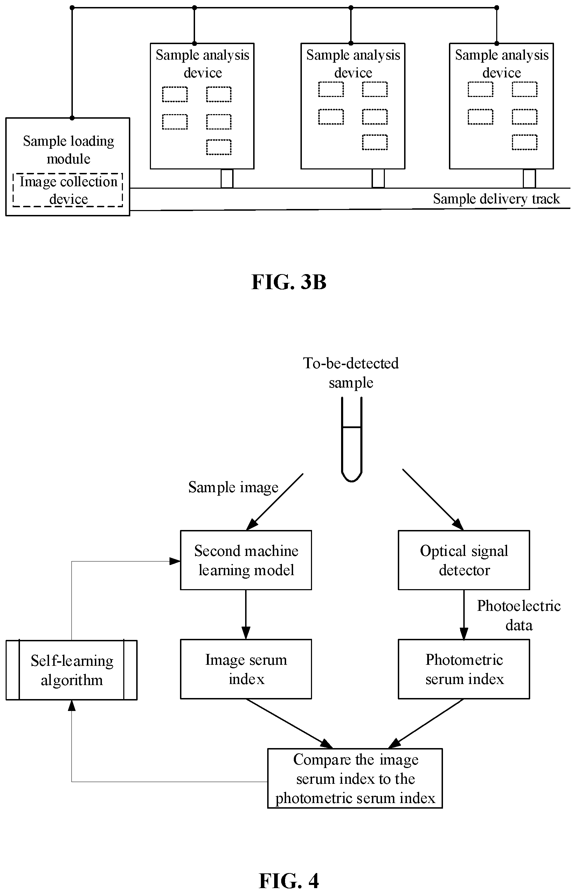

Alternatively, as shown in FIG. 3B, in case that the image acquisition device includes an image collection device, the sample analysis system includes an assembly line system formed by multiple sample analysis devices connected together, the image collection device is arranged in a sample loading module of the assembly line system, and the sample loading module is used for a user to place a sample vessel carrying the to-be-detected sample into the sample loading module. Specifically, the connection between multiple sample analyzers does not necessarily indicate that there is a connection between the sample analysis devices, for example, sample vessels are mutually transmitted among the sample analysis devices through a sample transition unit; or, multiple sample analysis devices may be independent of each other, and a sample delivery track of the assembly line system may sequentially distribute the sample vessels to different sample analysis devices, which also indicates the connection between multiple sample analysis devices. It should be noted that, with respect to the above sample analysis device shown in FIG. 2A, the sample analysis device in the assembly line system may include other unit modules besides the image collection device (as shown in dashed boxes).

The control device 60 is configured to determine first state information of the to-be-detected sample based on the sample image of the to-be-detected sample, obtain second state information of the reaction solution based on the photoelectric data, and determine an interference information such as an interferent information in the reaction solution based on the first state information in combination with the second state information. Furthermore, the control device 60 may also obtain a detection result of a detection item for the to-be-detected sample at least based on the photoelectric data.

The image acquisition device 50 may acquire the sample image of the to-be-detected sample, the detection device 40 may acquire the photoelectric data of the reaction solution prepared from the to-be-detected sample, and the control device 60 may be communicatively connected to the image acquisition device 50 and the detection device 40 to acquire the sample image and the photoelectric data. On one hand, the control device 60 may obtain the state information of the to-be-detected sample by analyzing the sample image, and on the other hand, the control device 60 may obtain the state information of the reaction solution by analyzing the photoelectric data. In order to facilitate distinction, the two state information are referred to as the first state information and the second state information respectively. The first state information is information of an interferent that causes an abnormality in a characteristic of the to-be-detected sample, the characteristic includes for example a precipitation, a color, a floc, a lump or other aspects, and the first state information characterizes an interference situation in the to-be-detected sample (for example, whether the to-be-detected sample is turbid, whether hemolysis is present in the to-be-detected sample, whether icterus is present in the to-be-detected sample, whether a certain type of interferent is present in the to-be-detected sample). The second state information characterizes an interference situation in the reaction solution (for example, whether the reaction solution is turbid, whether hemolysis is present in the reaction solution, whether icterus is present in the reaction solution, whether a certain type of interferent is present in the reaction solution).

It may be understood that the reaction solution is prepared from the to-be-detected sample and the reagent, and thus the interferent information may be determined by analyzing a difference between states of the to-be-detected sample before and after the reagent is added thereto. For example, an interferent source is determined (for example, whether the interferent comes from the to-be-detected sample, whether the interferent comes from the reagent, whether the interferent comes from a reaction process after the to-be-detected sample is mixed with the reagent), and an interferent type is determined (for example, the interferent type is a lipemia interference, a hemolysis interference, an icterus interference, or other types of interferents).

The detection result of the detection item is obtained based on the photoelectric data of the reaction solution. However, the photoelectric data are sensitive to some interferences in the reaction solution. For example, an abnormality in a physical characteristic of the reaction solution, such as a color, a floc, a lump, a precipitation or the like, may cause the photoelectric data of the reaction solution to be inaccurate, and thus the detection result obtained based on the photoelectric data of the reaction solution will also be inaccurate. Therefore, in order to determine the interference in the reaction solution more accurately, the embodiment of the invention comprehensively determines the interferent information in the reaction solution based on two types of state information (i.e., the first state information and the second state information), and such method may be referred to as joint determination. Compared to a method for determining the interferent information in the reaction solution by using only the second state information, information sources for determining the interference in such joint determination method are richer, and the determination result of the interference is more accurate. It may be understood that the joint determination method in each of the embodiments of the invention does not use only the first state information or only the second state information to obtain the interferent information in the reaction solution, instead, these two types of state information are combined to obtain the interferent information in the reaction solution. Furthermore, from the perspective of the interferent information, it is a comprehensive determination result from the two types of state information, i.e., the first state information and the second state information, rather than being obtained from only one of the two types of state information.

The joint determination may include various specific implementations, which will be respectively described below.

In a specific implementation, the first state information and the second state information are inputted into a pre-trained artificial intelligence (AI) detection model, and the AI detection model combines the first state information with the second state information, to comprehensively determine the state information of the reaction solution.

In another specific implementation, the first state information is compared to the second state information, and the interferent type or the interferent source in the reaction solution is determined based on the comparison result. The first state information reflects the interference related to the to-be-detected sample, and the second state information reflects the interference related to the reaction solution. Difference or similarity between interferences reflected by the first state information and the second state information may be found by comparing the two types of state information, and thus the interferent source or the interferent type may be determined.

In another specific comparison method, the first state information and the second state information are signal waveforms (referred to as a first signal waveform and a second signal waveform respectively), and the interferent source may be determined by comparing a difference between the first signal waveform and the second signal waveform. Specifically, if the first signal waveform is an abnormal signal waveform and the second signal waveform is an abnormal signal waveform, it is indicated that there is a large probability that the interferent comes from the to-be-detected sample. If the first signal waveform is a normal signal waveform and the second signal waveform is an abnormal signal waveform, it is indicated that there is a large probability that the interferent comes from the reaction reagent added to the to-be-detected sample or comes from the reaction process. If the first signal waveform is an abnormal signal waveform and the second signal waveform is a normal signal waveform, it is indicated that the detection is abnormal or there is a large probability that the interferent comes from the to-be-detected sample. If the first signal waveform is a normal signal waveform and the second signal waveform is a normal signal waveform, it is indicated that no interferent is present.

In yet another specific comparison method, the first state information and the second state information are interferent types (referred to as a first interferent type and a second interferent type respectively), and the interferent type in the reaction solution may be determined by comparing a commonality and difference between the first interferent type and the second interferent type. For example, a common interferent type between the first interferent type and the second interferent type is determined as the interferent type in the reaction solution; or, if the first interferent type includes no specific interferent type and the second interferent type includes the specific interferent type, the specific interferent type is removed from the second interferent type and then the remaining second interferent type is used as the interferent type in the reaction solution.

It may be seen from the above technical solution that in the sample analysis system provided in the embodiment of the invention, the image acquisition device may obtain the sample image of the to-be-detected sample, the detection device may obtain the photoelectric data of the reaction solution prepared from the to-be-detected sample, and the control device analyzes the sample image to obtain the state information of the to-be-detected sample, analyzes the photoelectric data of the reaction solution to obtain the state information of the reaction solution, and determines a specific interferent information by combining the two types of state information, thereby providing a basis for removing interferences and further improving the accuracy of the detection result of the sample.

In some embodiments, when the interferent information in the reaction solution is determined, the interferent information in the reaction solution may be further determined in combination with state information of the reaction reagent. Specifically, after the reaction reagent is dispensed into the reaction vessel and before the to-be-detected sample is dispensed, the irradiation light of the light source component forms an emission light after irradiating the reaction reagent, and the emission light here may be referred to as a second emission light, to distinguish from the above emission light of the reaction solution. The optical signal detector is further configured to acquire the second emission light and convert the second emission light into second photoelectric data. The control device is further configured to obtain a third state information of the reaction reagent based on the second photoelectric data.

Further, the interferent information in the reaction solution may be determined based on a combination of the first state information, the second state information and the third state information. In some embodiments, a common interferent type among the first state information, the second state information and the third state information may be used as the interferent information. In some embodiments, if the third state information indicates that the interferent source is the to-be-detected sample or the reaction reagent, the second state information indicates that the interference is present in the reaction reagent, and the first state information indicates that no interference is present in the to-be-detected sample, the reaction reagent may be determined as the interferent source.

It may be seen that in the embodiment, the interferent information may be determined by the state information of the to-be-detected sample in combination with the state information of the reaction solution and the state information of the reagent, and the determination result of the interferent is more accurate.

Hereinafter, how to determine the state information (the first state information) of the to-be-detected sample by using the sample image and how to determine the state information (the second state information) of the reaction solution by using the photoelectric data will be described respectively.

First, a method for determining the first state information will be described.

A first method is a traditional image analysis algorithm. A traditional image feature extraction algorithm is used to extract at least one of the following image features of the sample image: an edge feature, a gray distribution feature, a color feature, a texture feature, a shape feature and a spatial relationship feature, and the state information of the to-be-detected sample is obtained through the extracted image feature. Similarly, the state information of the reaction solution may be obtained. In one case, the state information of the to-be-detected sample may be directly obtained by at least one of the image features. In one case, a serum index of the to-be-detected sample may be obtained by at least one of the image features, and then the state information of the to-be-detected sample may be obtained based on the serum index.

A second method is a machine learning model analysis. The machine learning model may be pre-trained, the sample image is inputted into the trained machine learning model, and the machine learning model may automatically output the state information of the to-be-detected sample.

For example, 1) the sample image is inputted into a first preset machine learning model, and the first state information of the to-be-detected sample outputted by the first machine learning model is acquired; and 2) the sample image is inputted into a second preset machine learning model, a serum index of the to-be-detected sample outputted by the second machine learning model is acquired, the serum index may be referred to as an image serum index to distinguish from a serum index outputted by the detection device, and the first state information of the to-be-detected sample is obtained based on the image serum index.

A structure of the first machine learning model may be different from or the same as that of the second machine learning model, and the structures of the first machine learning model and the second machine learning model are not limited in the embodiments of the invention. For example, both the first machine learning model and the second machine learning model are neural network models, and may be formed by a Convolutional Neural Network (CNN).

Any of the above machine learning models may extract at least one of image features of the sample image, such as an edge feature, a gray distribution feature, a color feature, a texture feature, a shape feature and a spatial relationship feature. The edge feature characterizes a presence of a step change (a slope-type edge) or a roof-like change (a roof-type edge) in a pixel gray scale, a pixel brightness or a pixel color of the image. The gray distribution feature characterizes a distribution of gray values of the image. Each of the color feature and the texture feature is a global feature that describes a surface property of the to-be-detected sample corresponding to the image or an area of the image. The shape feature includes a contour feature that mainly describes a contour or boundary of a label and/or the sample vessel. The spatial relationship feature refers to spatial position or relative direction relationships among multiple objects segmented from the image, and these relationships may be classified as a connection relationship or adjacency relationship, an overlapping relationship or superimposing relationship, an inclusion relationship, or an independence relationship, etc.

The first machine learning model may determine the state information of the to-be-detected sample by using at least one of the above image features. In case that the to-be-detected sample is a blood sample, the second machine learning model may determine the serum index of the to-be-detected sample by using at least one of the above image features, and may output the serum index of the to-be-detected sample. The control device determines the state information of the to-be-detected sample based on the serum index, or the second machine learning model determines the state information of the to-be-detected sample by using the serum index determined by itself, and outputs the state information of the to-be-detected sample.

The serum index (i.e., Hemolysis, Icterus, Lipemia (HIL)) may reflect state information of the blood sample. Specifically, the blood sample may be classified into the following four types: a hemolysis sample (H sample), an icterus sample (I sample), a lipemia sample (L sample), and a normal sample. Hemolysis H, Icterus I and Lipemia L (also referred to as chylemia) are collectively referred to as HIL in the embodiments of the invention. The normal sample may be understood to be a sample containing an acceptable and small amount of HIL in serum or plasma, and color of the normal sample is transparent yellow or light yellow. The lipemia sample may be understood to be a blood sample containing an abnormally high concentration of emulsified fat, and color of the lipemia sample is dark yellow, gray, white or milky white. The color of the blood sample varies depending on a lipemia index, for example, the blood sample with a low lipemia index appears to be dark yellow, and the blood sample with a high lipemia index appears to be gray, white or milky white. The hemolysis sample may be understood to be a blood sample in which hemoglobin has escaped from red blood cells due to rupture of the red blood cells, and color of the hemolysis sample is light red, dark red, or light red to dark red. The higher the hemolysis index, the darker the color of the blood sample. The icterus sample may be understood to be a blood sample stained yellow due to elevated bilirubin. Since an abnormal blood sample will show a corresponding color or other characteristics, the state information of the blood sample may be obtained based on the image features, and the state information may reflect whether the blood sample is abnormal.

In order to improve accuracy of identifying the serum index by the machine learning model, the machine learning model may be updated by using a serum index of a historical sample. Specifically, serum indices obtained from the historical sample in two methods (identification with the machine learning model and identification without the machine learning model) are compared, and the machine learning model is updated by using the comparison result. In a specific implementation, for each of multiple historical samples, a first serum index of the historical sample is compared to a second serum index of the historical sample to obtain a serum index comparison result. The first serum index is obtained based on photoelectric data acquired by the optical signal detector after the light source component irradiates a reaction solution formed by the historical sample, and the second serum index is obtained by inputting a sample image of the historical sample into the second machine learning model. The second machine learning model is updated by using serum index comparison results of the multiple historical samples.

As shown in FIG. 4, a specific implementation of self-learning of the second machine learning model is shown. With respect to the same historical sample, on one hand, a serum index of the historical sample may be measured by an optical detection device (the light source component irradiates a reaction solution prepared from the historical sample, and the optical signal detector acquires photoelectric data and analyzes the photoelectric data, to obtain a detection result of the serum index). In order to facilitate differentiation, the serum index may be referred to as a photometric serum index. On the other hand, a sample image of the historical sample may be inputted into the second machine learning model, the second machine learning model may analyze image features in the sample image and then output a serum index of the historical sample, and the serum index may be referred to as an image serum index. Serum indices obtained by these two methods are compared, and the comparison result is used by a self-learning algorithm to adjust the second machine learning model. It should be noted that the historical sample may be a current to-be-detected sample, or may be any sample detected before the to-be-detected sample. After the second machine learning model has been trained, the second machine learning model is continuously iteratively optimized by using the historical samples, so that identification of the serum index by the second machine learning model may be more accurate.

Hereinafter, a method for determining the second state information (the state information of the reaction solution) will be described.

The photoelectric data of the reaction solution may include intensities of multiple optical signals with different wavelengths, and/or include a signal sequence formed by relationships between intensities and time of optical signals corresponding to the same wavelength. The state information of the reaction solution is obtained by comparing and analyzing the intensities of the optical signals with different wavelengths, and/or analyzing the intensities of respective optical signals in the signal sequence corresponding to the same wavelength. The state information characterizes an interferent situation in the reaction solution, or may be considered to characterize whether the reaction solution is abnormal. For example, the state information characterizes whether a foreign matter is present in the reaction solution, whether the reaction solution is unevenly mixed, whether the reaction solution is clear or turbid, or a specific interferent (such as lipid particles) present in the reaction solution.

In a first method, when the control device 60 obtains the second state information of the reaction solution based on the photoelectric data, the control device 60 is specifically configured to: extract at least one characteristic interference quantity from the photoelectric data, and obtain the second state information of the reaction solution based on the at least one characteristic interference quantity. The characteristic interference quantity is a signal characteristic for identifying an abnormality.

Specifically, if the photoelectric data include the intensities of multiple optical signals with different wavelengths, the intensities of the multiple optical signals with different wavelengths may be obtained at the same position of the reaction solution in the same time period, and the photoelectric data corresponding to multiple wavelengths may be referenced to each other. Therefore, the state information of the reaction solution may be obtained by comparing the intensities of the optical signals with different wavelengths at the same position in the same time period. The characteristic interference quantity extracted from the intensities of the multiple optical signals with different wavelengths includes, but is not limited to a range of an interference wavelength band.

If the photoelectric data include a signal sequence formed by correspondences between intensities and time of optical signals corresponding to the same wavelength, the signal sequence may be expressed as a pulse waveform (or referred to as a signal curve). At least one of the following characteristic interference quantities may be extracted from the photoelectric data corresponding to each wavelength, such as a peak value, a valley value, a pulse start point, a pulse end point, a pulse width, a half peak width, a specific width, an area, a slope, a rising edge timing and a falling edge timing in the signal curve corresponding to the signal sequence. The at least one characteristic interference quantity is used to determine the state information of the reaction solution. For example, whether an abnormality occurs in the reaction solution may be determined by using a number of peaks or valleys in the signal sequences in multiple detection periods of the same reaction solution.

The photoelectric data of the reaction solution may be drawn to obtain a reaction curve (a reaction spectrum), and whether the photoelectric data of the reaction solution is subject to a certain interference may be determined by using the reaction curve of the reaction solution and multiple interference characteristic quantities. For example, the interference in the detection item (the interference does not have a reaction characteristic in the detection item) is identified by a 3D reaction curve. Specifically, if a biochemical reaction in the detection item has a reaction characteristic at wavelengths 1 to 5, and a certain interference has a reaction characteristic at wavelength 7, the wavelength 7 is considered to be the interference characteristic quantity of the interference. When the interference characteristic quantity exceeds a normal threshold, it is considered that the detection item of the sample is subject to the interference.

In a second method, when the control device 60 obtains the second state information of the reaction solution based on the photoelectric data, the control device 60 is specifically configured to: input the photoelectric data into a third preset machine learning model, and acquire the second state information of the reaction solution outputted by the third machine learning model from the photoelectric data. For example, absorbance or reactivity may be calculated by using the light intensity signal in the photoelectric data, the absorbance or the reactivity may be inputted into the third machine learning model, and the third machine learning model may output information about whether the reaction solution is abnormal and/or the interferent type in the reaction solution.

The machine learning model here may be referred to as the third machine learning model, to distinguish from the above first machine learning model and the above second machine learning model. Similar to the above machine learning models, the third machine learning model may be a neural network model, and a structure of the third machine learning model may be the same as or different from that of the above first machine learning model and the above second machine learning model. The third machine learning model may be a machine learning model trained by using the photoelectric data as sample data, so that the third machine learning model has a capability of identifying the state information of the reaction solution, and the photoelectric data may be inputted into the pre-trained third machine learning model, to obtain the state information of the reaction solution. The neural network model may be a network model with any existing structure, including but not limited to CNN.

The interferent information in the reaction solution determined by using the first state information and the second state information includes an interferent source or an interferent type.

In some embodiments, the state information of each of the to-be-detected sample and the reaction solution may include a turbidity value, and the interferent source in the reaction solution may be determined by using turbidity values of the to-be-detected sample and the reaction solution. Specifically, the first state information identified from the sample image of the to-be-detected sample includes a turbidity value of the to-be-detected sample (referred to as a first turbidity value for ease of differentiation), and the second state information identified from the photoelectric data of the reaction solution includes a turbidity value of the reaction solution. The turbidity value indicates a degree of turbidity of a liquid (the to-be-detected sample or the reaction solution). The interferent source in the reaction solution may be determined by comparing the turbidity value of the to-be-detected sample to the turbidity value of the reaction solution (a mixture of the to-be-detected sample and the reagent).

In some embodiments, when the interferent information is determined by using the first state information and the second state information, the control device 60 may be specifically configured to determine the interferent source based on the first turbidity value and the second turbidity value, such as a deviation between these two turbidity values. The normal to-be-detected sample is usually in a clear state, for example, the normal blood/serum sample is in a clear state, and turbidity may occur if the sample is subject to interferences. Therefore, the turbidity value of the reaction solution is compared to the turbidity value of the to-be-detected sample, and if there is a large deviation between these two turbidity values, the interferent source may be determined. In some embodiments, the state information of each of the to-be-detected sample and the reaction solution may include a clear/turbid state, that is, the first state information includes a clear/turbid state of the to-be-detected sample, and the second state information includes a clear/turbid state of the reaction solution. The interferent source in the reaction solution may be determined based on the clear/turbid states of the to-be-detected sample and the reaction solution. The clear/turbid state may be determined by comparing the turbidity value to a threshold.

If the turbidity value of the to-be-detected sample is high and the turbidity value of the reaction solution is also high, it may be determined that the interferent comes from the to-be-detected sample. If the turbidity value of the to-be-detected sample is low while the turbidity value of the reaction solution is high, it may be determined that the interferent does not come from the to-be-detected sample, instead, may come from other interference factors other than the to-be-detected sample, such as the reagent, the sample vessel or the reaction process. The turbidity value may indicate a characteristic of the sample, and if the characteristic of the sample varies too much, it may be considered that the interferent comes from the reagent.

For example, the interferent comes from the reagent. It is assumed that the blood sample is normal without interference. When an abnormal pretreatment solution is added into the to-be-detected sample (for example, a physiological saline with insufficient salinity is added into the to-be-detected sample), proteins that were evenly distributed in the serum are coagulated and precipitated to form chylous particles due to equipotential variation of the solvent, resulting in a certain turbidity in the mixed solution, and turbidity is also present in the reaction solution further prepared from the mixed solution. The pretreatment solution includes, but is not limited to a physiological saline, a buffer, a diluent, etc.

For example, the interferent comes from the reaction process. A specific substance component in the to-be-detected sample may react with a specific substance component in the reagent to generate an interferent. For example, a globulin in the blood sample may react with a specific substance component in a creatinine reagent to generate a substance that causes turbidity, and a heparin in the blood sample may react with a specific substance component in a Creatine Kinase (CK) reagent to generate a substance that causes turbidity.

For example, the interferent comes from the sample vessel. It is assumed that particulate interferences are present in the sample vessel, or a specific substance component is present in the sample vessel, which may react with the to-be-detected sample to generate interferences. In this case, the sample vessel may also be considered as the interferent source.

In some embodiments, the first state information includes a clear/turbid state of the to-be-detected sample, the clear/turbid state is a state information qualitatively indicating a degree of turbidity of the to-be-detected sample, and may specifically include clarity or turbidity. The second state information includes a clear/turbid state of the reaction solution, and may specifically include clarity or turbidity. When the interferent information is determined by using the first state information and the second state information, the control device 60 may be configured to determine the interferent source based on the clear/turbid state of the to-be-detected sample and the clear/turbid state of the reaction solution. A specific process thereof may refer to the above methods related to the turbidity value, and is not elaborated here.

In some embodiments, the first state information includes a clear/turbid state of the to-be-detected sample, the clear/turbid state is a state information qualitatively indicating a degree of turbidity of the to-be-detected sample, and may specifically include clarity or turbidity. The second state information includes an interferent type of an interferent in the reaction solution. It should be noted that the interferent type included in the second state information may be obtained by using any method for detecting the interferent, including but not limited to spectral detection. Therefore, when the interferent information in the reaction solution is determined based on the first state information and the second state information, the control device 60 may be configured to determine the interferent type as a lipemia interference, in response to the clear/turbid state of the to-be-detected sample being turbid and at least one interferent type in the reaction solution including the lipemia interference. The control device 60 may further be configured to determine the interferent type of the interferent in the reaction solution based on an interferent type corresponding to the detection item for the to-be-detected sample, in response to the clear/turbid state of the to-be-detected sample being clear. For example, the interferent type corresponding to the detection item is used as the interferent type in the reaction solution, or the interferent type in the reaction solution is obtained by removing the lipemia interference from the interferent type corresponding to the detection item.

The first state information may be a state identifier (ID), for example, ID 1 indicates turbidity, and ID 0 indicates clarity; or, the first state information may be a state text such as clarity or turbidity. The second state information may be an ID of the interferent type, for example, ID 01 indicates an interference A, ID 02 indicates an interference B, ID 03 indicates an interference C, etc. The second state information may also be a text describing the interferent type.

The blood sample is used as an example. If the blood sample is in a turbid state, it is indicated that the lipemia interference is present in the to-be-detected sample. Furthermore, if the interferent type identified from the reaction solution includes at least the lipemia interference, the interferent type may be determined as the lipemia interference. If the blood sample is in a clear state, it is indicated that no lipemia interference is present in the to-be-detected sample, and if at least one interferent type detected from the reaction solution includes the lipemia interference and further includes other interferent types, the lipemia interference may be removed from the at least one interferent type, to obtain an accurate determination result of the interferent type.

In some embodiments, the photoelectric data of the reaction solution is obtained during a detection item. For example, the sample analysis system acquires the photoelectric data of the reaction solution in a process of performing a detection item for the to-be-detected sample, and analyzes the photoelectric data to obtain the detection result of the item. The detection item usually refers to a biochemical detection item.

Analysis of the photoelectric data during the detection item can on one hand obtain the detection result of the item, and on the other hand, can also obtain the second state information indicating whether an interference is present in the reaction solution. The second state information includes the interferent type that may be present in the detection item, for example, the interferent type that may be present in the reaction solution analyzed in a creatinine item includes a globulin interference and the lipemia interference, and the interferent type that may be present in the reaction solution analyzed in a CK item includes a heparin interference and the lipemia interference.

The interferent type in the reaction solution may be accurately determined by combining the indication of the clear/turbid state of the to-be-detected sample in the first state information and a possible interferent type included in the second state information. Specifically, when the interferent information in the reaction solution is determined based on the first state information and the second state information, the control device 60 is specifically configured to determine the interferent type of the interferent in the reaction solution by combining the clear/turbid state of the to-be-detected sample and the interferent type corresponding to the detection item for the to-be-detected sample.

If the clear/turbid state of the to-be-detected sample is clear, the lipemia interference may be removed from the interferent type corresponding to the detection item. If the clear/turbid state of the to-be-detected sample is turbid and the interferent type corresponding to the detection item for the to-be-detected sample includes the lipemia interference, the interferent type of the interferent in the reaction solution may be determined as the lipemia interference.

The creatinine item is used as an example, and the interferent type included in the second state information includes the globulin interference and the lipemia interference. If the to-be-detected sample is in a clear state, the interferent type in the reaction solution is determined as the globulin interference; and if the to-be-detected sample is in a turbid state, the interferent type in the reaction solution is determined as the lipemia interference. The CK item is used as an example, and the interferent type included in the second state information includes the heparin interference and the lipemia interference. If the to-be-detected sample is in a clear state, the interferent type in the reaction solution is determined as the heparin interference; and if the to-be-detected sample is in a turbid state, the interferent type in the reaction solution is determined as the lipemia interference.

The first state information may include the interferent type of the to-be-detected sample. Interferent types with the same attribute may be included in the same group of interferent types, and the same attribute may specifically correspond to the same interference cause, that is, interferent types pointing to the same interference cause may be included in the same group of interferent types. Similarly, the second state information may include a group of interferent types in the reaction solution. For example, a cause of a precipitation interference may include the lipemia interference or other precipitates. For ease of differentiation, the two groups of interferent types are referred to as a first group of interferent types and a second group of interferent types respectively.

When the interferent information in the reaction solution is determined based on the first state information and the second state information, the control device 60 is specifically configured to determine a common interferent type between the first group of interferent types and the second group of interferent types as the interferent type in the reaction solution. For example, if the first group of interferent types includes the lipemia interference, and the second group of interferent types includes the lipemia interference and the globulin interference, the common interferent type, i.e., the lipemia interference may be used as the interferent type in the reaction solution.

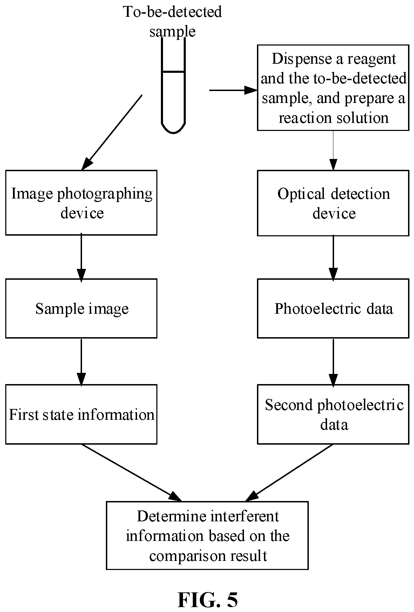

With reference to FIG. 5, an interference detection process performed by the sample analysis system is provided in an embodiment of the invention. The to-be-detected sample is moved to a designated position through a sample delivery module (SDM), an image photographing device photographs the to-be-detected sample to obtain a sample image, and the first state information is identified from the sample image. A reagent dispensing device dispenses a reagent into the reaction vessel, and a sample dispensing device dispenses the to-be-detected sample into the reaction vessel, to prepare a reaction solution. The detection device performs optical detection on the reaction solution to obtain photoelectric data, and the second state information is identified from the photoelectric data. The first state information is compared to the second state information, and the interferent information is determined based on the comparison result. For example, in case that the state information is a characteristic of the sample, if the characteristic of the sample varies significantly, it may be considered that the interferent comes from the reagent. It should be noted that the reagent added into the reaction vessel may include multiple reagents, such as the pretreatment solution, the reaction reagent, etc.

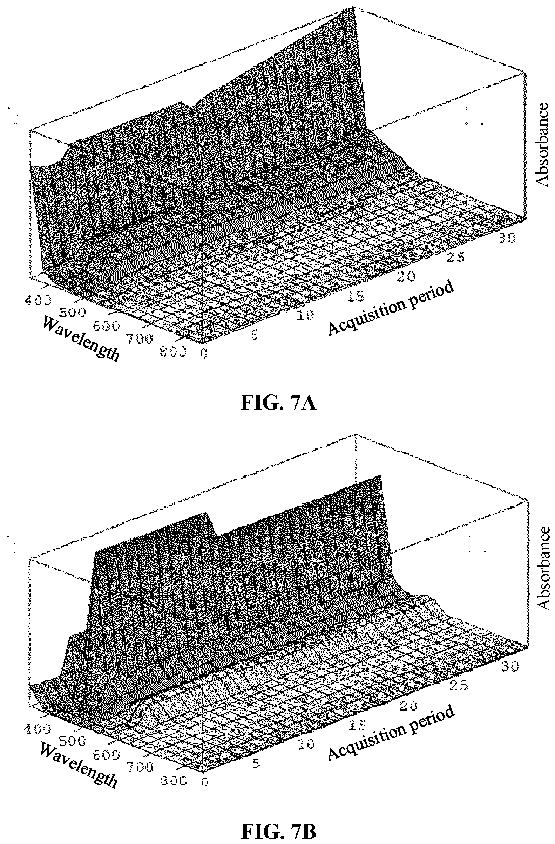

In some embodiments, the photoelectric data may be obtained during a detection item, and the control device 60 may be further configured to obtain a detection result of the detection item for the to-be-detected sample based on the photoelectric data. In a specific implementation, a spectral curve for the detection item may be generated by using the photoelectric data from the detection item, the abscissa of the spectral curve is an acquisition moment, and the ordinate of the spectral curve is absorbance or reactivity. The detection result of the detection item may be obtained by analyzing the spectral curve. It should be noted that the spectral curve may be a 2D reaction curve or a 3D spectrogram. In the 3D spectrogram, the photoelectric data acquired by the detection device include signal sequences corresponding to multiple wavelengths. Reference is made to a normal 3D spectrogram of the CK item provided in FIG. 7A, in which the X coordinate axis represents an acquisition moment, the Y coordinate axis represents absorbance, and the Z coordinate axis represents a wavelength band with different wavelengths. A detection concentration of CK in the blood sample may be obtained by analyzing absorbance at multiple wavelengths in the 3D spectrogram.

Since the interference may be present in the to-be-detected sample or the reaction solution prepared from the to-be-detected sample, the detection result obtained from the photoelectric data of the reaction solution is not accurate enough. In order to improve the accuracy of the detection result, the photoelectric data corresponding to the detection item may be corrected to obtain a more accurate detection result. Therefore, when the detection result of the detection item for the to-be-detected sample is obtained based on the photoelectric data, the control device 60 may be specifically configured to correct the photoelectric data based on the interferent information, to obtain the detection result of the detection item. That is, the detection result obtained by the control device is a corrected detection result.

A correction method may include the following operations. An initial detection result of the detection item for the to-be-detected sample is obtained by using the photoelectric data of the reaction solution, and then the initial detection result is corrected by using the interferent information, to obtain the detection result of the detection item for the to-be-detected sample.

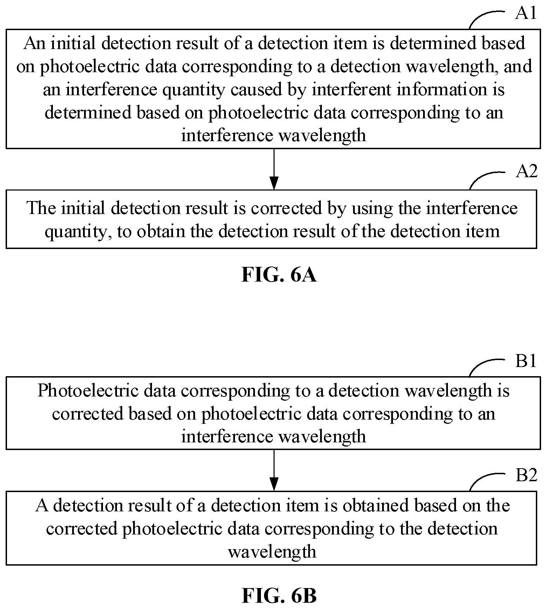

With reference to FIG. 6A, in some embodiments, in order to correct an impact of the interference on the detection result, the control device 60 is specifically configured to perform the following operations A1 and A2. In operation A1, an initial detection result of the detection item is determined based on photoelectric data corresponding to a detection wavelength, and an interference quantity caused by the interferent information is determined based on photoelectric data corresponding to an interference wavelength. In operation A2, the initial detection result is corrected by using the interference quantity, to obtain the detection result of the detection item.

In this implementation, the control device 60 determines, from the photoelectric data, the photoelectric data corresponding to the detection wavelength for the detection item and photoelectric data corresponding to an interference wavelength of an interferent (the interferent is determined by the interferent information), and then determines the initial detection result based on the photoelectric data corresponding to the detection wavelength, for example, the detection result of the detection item is obtained by analyzing the photoelectric data corresponding to the detection wavelength (a deviation is present between the detection result and an accurate result due to interference, and the detection result may be referred to as the initial detection result, to distinguish from the corrected detection result below). It may be understood that the detection result may indicate a proportion of a detection substance, corresponding to the detection item, in the to-be-detected sample. Similarly, the interference quantity caused by the interferent may be determined based on the photoelectric data corresponding to the interference wavelength. That is, a detection result of the interferent, i.e., a proportion of the interferent in the to-be-detected sample may be determined by using the photoelectric data corresponding to the interference wavelength, which may be considered as a proportion of the impact of the interferent on the detection result, and may therefore be referred to as an interference quantity. Finally, the initial detection result is corrected based on the interference quantity, to obtain the detection result of the detection item, that is, the initial detection result is corrected by using the interference quantity, for example, the interference quantity is subtracted from the initial detection result, to obtain the corrected detection result.

In an actual application, the interference may be removed by using an interference calculation formula. In the interference calculation formula, characteristics of photoelectric data of the interference in different bands and at different time points are combined and calculated. For example, the impact of the interference on the detection result may be eliminated based on a change in a 3D absorbance curve caused by the interferent. If the detection item is subject to different types of interferents, the interferences are removed by using interference calculation formulas corresponding to different types of interferents. The interference calculation formula may include spectral information at different wavelengths, for example, an interference calculation formula is x*[a]+y*[b]-z*[c], where x, y and z are preset coefficients, and a, b and c are absorbance at respective wavelengths.

For example, in the CK detection item, the reaction solution is prepared by using a CK reagent. As shown in FIG. 7A, the normal 3D spectrum of the CK detection item has a spectral peak only below 400 nm, and a dominant wavelength thereof is 340 nm. Once a hemolysis interference is present, which may refer to an exemplary diagram of a hemolysis spectrum of the CK detection item provided in FIG. 7B, the spectral peak at a wavelength of 340 nm is elevated in the presence of hemolysis interference, thereby bringing a positive bias to the detection result. In a multi-wavelength interference calculation method, a characteristic peak caused by the interference, especially a characteristic peak at a wavelength of 412 nm is captured, because a normal CK detection does not generate photoelectric data in this wavelength band, and only the hemolysis interference will generate a strong characteristic peak in this wavelength band. Therefore, whether the hemolysis interference exceeds an acceptable threshold is determined by using the spectral information at the wavelength of 412 nm, and the hemolysis interference is quantified by the peak at this wavelength. The interference quantity caused by the hemolysis interference in the spectral information at the wavelength of 340 nm is calculated by a normalized coefficient formula and is removed, to restore a chemical reaction with the reagent in the CK detection item to the greatest extent, and approach to a real detection result of the CK detection item to the greatest extent. The interference calculation formula corresponding to the hemolysis interference in the CK detection item is x*[absorbance corresponding to the wavelength of 340 nm]-y*[absorbance corresponding to the wavelength of 412 nm]. The absorbance after removing the interference is further converted, to obtain the corrected CK detection result. It should be noted that the CK detection item may also be provided with other interference characteristic quantities and interference calculation formulas based on the spectral information.

Different types of interferences have different characteristics and manifestations. The interference calculation formula may quantify a degree of interference in the to-be-detected sample, so that the detection result of the detection item can be corrected.

In another correction method, the photoelectric data is corrected by using the interferent information in the reaction solution, and then the detection result of the detection item for the to-be-detected sample is obtained based on the corrected photoelectric data.

In some embodiments, when the detection result of the detection item for the to-be-detected sample is obtained at least based on the photoelectric data of the reaction solution, the control device 60 is configured to: determine, from the photoelectric data, photoelectric data corresponding to a detection wavelength for the detection item and photoelectric data corresponding to an interference wavelength of an interferent (the interferent is determined by the interferent information); correct the photoelectric data corresponding to the detection wavelength by using the photoelectric data corresponding to the interference wavelength; and obtain the detection result of the detection item based on the corrected photoelectric data corresponding to the detection wavelength. It may be understood that in case that the interference is present in the reaction solution, the photoelectric data acquired by the detection device includes both the photoelectric data corresponding to the interferent and the photoelectric data corresponding to the detection item. Therefore, the two types of photoelectric data are extracted from the photoelectric data respectively. Specifically, the photoelectric data include photoelectric data corresponding to different wavelengths, and a wavelength of an optical signal generated by the interferent may be different from a wavelength of an optical signal generated by a detection substance corresponding to the detection item. Therefore, the photoelectric data corresponding to the interferent and the photoelectric data corresponding to the detection item are extracted from the photoelectric data respectively based on the wavelength band. Further, the photoelectric data corresponding to the detection item is corrected by using the photoelectric data of the interferent, to obtain a more accurate detection result.

With reference to FIG. 6B, in some embodiments, in order to correct an impact of the interference on the detection result, the control device 60 is specifically configured to perform the following operations B1 and B2. In operation B1, the photoelectric data corresponding to the detection wavelength is corrected based on the photoelectric data corresponding to the interference wavelength. In operation B2, the detection result of the detection item is obtained based on the corrected photoelectric data corresponding to the detection wavelength.

The control device 60 first corrects the photoelectric data corresponding to the detection wavelength, then analyzes the corrected photoelectric data corresponding to the detection wavelength, to obtain the detection result of the detection item, and the detection result is closer to the real result of the to-be-detected sample. Methods for correcting the photoelectric data corresponding to the detection wavelength include, but are not limited to multi-band fitting correction and function correction.

For example, if the photoelectric data corresponding to the interference wavelength include photoelectric data corresponding to multiple wavelengths, interference fitted photoelectric data is obtained by fitting the photoelectric data corresponding to multiple wavelengths. The interference fitted photoelectric data is deducted from the photoelectric data corresponding to the detection wavelength, to correct the photoelectric data corresponding to the detection wavelength. In an example of a reactivity spectrum, the reactivity spectrum may be generated by drawing the photoelectric data of the reaction solution in a coordinate system. An interference spectrum is obtained by fitting data in a band affected by the interference in the reactivity spectrum, and the interference spectrum is deducted from data corresponding to the detection wavelength, to obtain a spectrum closer to an interference-free state. A detection result calculated by this spectrum is more accurate. Similarly, an absorbance spectrum may refer to the above correction process.

It is assumed that the photoelectric data include photoelectric data of band 1, band 2, band 3... band n, and the photoelectric data of part or all of the bands are selected for fitting depending on whether a change in an optical signal intensity of a band is only related to a target interference, for example, the photoelectric data of band 1, band 2 and band m (m is less than or equal to n) are selected. Reactivity at the selected bands is fitted by using a specific function to obtain a fitted spectrum, an original reactivity spectrum is generated by using the photoelectric data corresponding to the detection wavelength, the fitted spectrum is deducted from the original reactivity spectrum to obtain a corrected reactivity spectrum, and the detection result of the detection item is calculated by using the corrected reactivity spectrum. Similarly, the absorbance spectrum may refer to the above correction process.

In another method, N dominant and secondary wavelength combinations are selected from the photoelectric data corresponding to the detection wavelength, and a standard function corresponding to each dominant and secondary wavelength combination is determined. An empirical function of the interference caused by the interferent information to each dominant and secondary wavelength combination is selected. For the same dominant and secondary wavelength combination, a corresponding standard function is combined with a corresponding empirical function, to obtain a superimposed spectral function. Superimposed spectral functions corresponding to the N dominant and secondary wavelength combinations are solved, to obtain the corrected detection result of the detection item.

The reactivity spectrum is used as an example. At least one set of dominant and secondary wavelengths is selected, and a wavelength combination of the at least one set of dominant and secondary wavelengths needs to satisfy the following conditions. A reactivity calculated at a wavelength combination 1 is brought into a calibration curve corresponding to the wavelength combination, to obtain a concentration C1; a reactivity calculated at a wavelength combination 2 is brought into a calibration curve corresponding to the wavelength combination, to obtain a concentration C2; and a reactivity calculated at a wavelength combination n is brought into a calibration curve corresponding to the wavelength combination, to obtain a concentration Cn. If multiple concentrations (C1, C2, ..., Cn) are close enough, or a range thereof is within a small threshold, it is indicated that the multiple wavelength combinations satisfy the conditions. Similarly, the absorbance spectrum may refer to the above correction process.

It may be understood that a measured reactivity spectrum corresponding to each wavelength combination is a linear superimposition of the interference spectrum and a target reaction spectrum. Therefore, after each wavelength combination is selected, a set of equations may be obtained based on an empirical function of the interference spectrum and the calibration curve corresponding to the wavelength combination, where unknowns are parameters and concentrations in the empirical function. A theoretical true concentration may be solved only if a number of equations in the set of equations is greater than the unknowns. The number of equations depends on a number of wavelength combinations, that is, if a number of parameters in the empirical function is N, the number of wavelength combinations is required to be N+1. Similarly, the absorbance spectrum may refer to the above correction process.

In order to enable the user to know specific content of the interferent information, the control device is further configured to output an interference prompt information based on the interferent information, in case that the interferent information indicates a presence of an interference, so that the user may remove the interference based on the interferent information. The interference prompt information includes, but is not limited to whether the interference is present, the interferent type, the interferent source, a detection item affected by the interference, an impact on the detection result of the detection item (such as a positive impact, a negative impact, a degree of impact), etc. In some embodiments, the sample analysis system may include a display device, and the control device controls the display device to output the above interference prompt information. The display device may be integrated into a single sample analysis device in form of a display screen, or may be provided independent of the sample analysis device. For example, in an assembly line system, a large assembly line screen may be provided to display operation status of each sample analysis device. In some other embodiments, the sample analysis system may not include the display device, and the control device sends the interference prompt information to the display device, to output and display the interference prompt information. Alternatively, the control device is further configured to output the detection result of the detection item, and/or output the interferent information in the reaction solution, such as the interferent source or the interferent type.

In some embodiments, if the interferent information indicates the presence of the interferent, the sample analysis system may automatically process the interference, for example, redetect or recover the to-be-detected sample. Processing the interference includes, but is not limited to processing the interference based on the first state information, or processing the interference based on the interferent information obtained from the first state information and the second state information. It should be noted that the method for removing the interference performed before redetection is related to the interferent type. If the lipemia interference is present, the interference may be removed by volume reduction, dilution or other methods, and if the hemolysis interference is present, blood may be re-acquired, etc.

In case that the interferent information indicates that the degree of interference is a first degree of severity, the interference is removed and re-test is performed. In case that the interferent information indicates that the degree of interference is a second degree of severity, the to-be-detected sample is directly recovered, for example, the sample vessel is transferred to a recovery position. After the interferent information is obtained by using the first state information in combination with the second state information, the interference is processed by using the interferent information, and an accuracy of a processing basis is higher compared to automatically processing by using the first state information only.

However, in order to further save sample detection time, simplify repeated operations and improve detection efficiency, the to-be-detected sample may be redetected or recovered directly based on the first state information after the first state information is obtained. Two redetection processes will be compared and analyzed below, to explain advantages of this redetection method in simplifying the detection process.

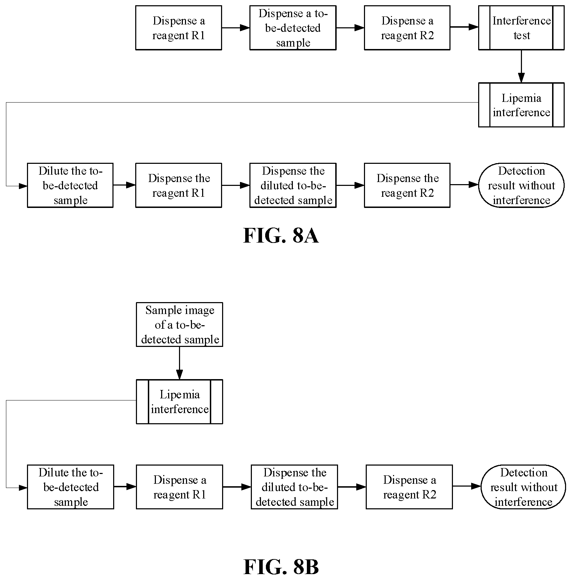

As shown in FIG. 8A, in a detection process, the reagent R1, the to-be-detected sample and the reagent R2 are dispensed into the reaction vessel respectively, the reaction solution is prepared therefrom, and then the interference detection is performed. If it is found after detection that the lipemia interference is present in the reaction solution, the to-be-detected sample is diluted. The reagent R1, the diluted to-be-detected sample and the reagent R2 are re-dispensed into the reaction vessel respectively, the reaction solution is prepared therefrom, and then an item detection is performed, to obtain a detection result without interference.

As shown in FIG. 8B, in a detection process, the image collection device obtains a sample image of the to-be-detected sample, and identifies the first state information from the sample image. If the first state information indicates the presence of the lipemia interference, the to-be-detected sample is diluted directly, then the reagent R1, the diluted to-be-detected sample and the reagent R2 are dispensed into the reaction vessel respectively, the reaction solution is prepared therefrom, and the item detection is performed, to obtain a detection result without interference. It can be seen that this detection process avoids finding interference after the detection has been completed, instead, the interference is found and processed before adding reagents, thereby saving the detection operations and improving the detection efficiency.

In a specific implementation, if the first state information indicates that the degree of interference in the to-be-detected sample reaches the first degree of severity, the to-be-detected sample is processed first based on an interference type corresponding to a first sample state, then the sample dispensing mechanism is controlled to aspirate the sample from the processed to-be-detected sample and transfer the sample to the reaction vessel, the reagent dispensing mechanism is controlled to dispense the reagent into the reaction vessel, and the item detection is performed after the reaction solution is prepared in the reaction vessel. If the first state information indicates that the degree of interference in the to-be-detected sample reaches the second degree of severity, the sample vessel is controlled to be recovered.

In order to further improve the accuracy of identifying the interferent information, in some embodiments, the interference may be determined in combination with photoelectric data of the reagent. Specifically, the control device may control the reagent dispensing mechanism to dispense the reagent into the reaction vessel, and obtain the photoelectric data of the reagent acquired by the optical signal detector after the reagent is added into the reaction vessel. The control device controls the sample dispensing mechanism to dispense the to-be-detected sample into the reaction vessel (if the foregoing reagent is a pretreatment reagent, the control device controls the reagent dispensing mechanism to dispense the reaction reagent into the reaction vessel), and the reaction solution is prepared from the to-be-detected sample and the reagent in the reaction vessel. The interferent information in the reaction solution is determined based on the first state information of the to-be-detected sample, the second state information of the reaction solution and the photoelectric data of the reagent.

When only the reagent is present in the reaction vessel, a state of the reagent in the reaction vessel, such as a PH value of the reagent, may be obtained based on the photoelectric data or absorbance or transmittance obtained from the photoelectric data, and whether there is an abnormality in the reagent, such as a long time for opening a cap of a reagent bottle, expiration of the reagent, or deterioration of the reagent or the like, may be determined based on the obtained state of the reagent.

An embodiment of the invention further provides a sample analysis system. The sample analysis system may correct a detection result of a detection item based on first state information and second state information, so that the sample analysis system can remove an interference and output the detection result closer to an actual sample condition. The sample analysis system provided in the embodiment of the invention includes a sample preparation device, a detection device, an image acquisition device, and a control device.

The sample preparation device is configured to prepare a reaction solution using at least a portion of a to-be-detected sample and a reaction reagent. In a specific implementation, the sample preparation device includes a sample dispensing mechanism, a reagent dispensing mechanism, and a reaction device.

The detection device includes a light source component and an optical signal detector. The light source component is configured to generate an irradiation light, the irradiation light forms a first emission light after irradiating the reaction solution, and the optical signal detector acquires the first emission light to obtain photoelectric data.

The image acquisition device is configured to acquire a sample image of the to-be-detected sample in a sample vessel.

The control device is configured to determine first state information of the to-be-detected sample based on the sample image of the to-be-detected sample, obtain second state information of the reaction solution based on the photoelectric data, correct the photoelectric data based on the first state information in combination with the second state information, and obtain a detection result of a detection item for the to-be-detected sample based on the corrected photoelectric data.

Hereinafter, only the detection device and the control device will be briefly described, descriptions of other components may refer to related descriptions in the above embodiments, and are not elaborated here.

It should be noted that the detection device acquires photoelectric data for a specific detection item, that is, for a to-be-detected item. During detection of the item, the light source component is configured to generate an irradiation light, the irradiation light forms an emission light after irradiating the reaction vessel, and the optical signal detector acquires the emission light to obtain the photoelectric data.

The control device is configured to determine first state information of the to-be-detected sample based on the sample image of the to-be-detected sample, obtain second state information of the reaction solution based on the photoelectric data, correct the photoelectric data by using the first state information in combination with the second state information, and obtain a detection result of a detection item for the to-be-detected sample based on the corrected photoelectric data. After obtaining the first state information and the second state information, the control device may directly correct the photoelectric data of the reaction solution in the detection item by using these two types of state information, to obtain the corrected item detection result. In some embodiments, the first state information of the to-be-detected sample is information of an interferent that causes an abnormality in a characteristic of the to-be-detected sample.

In some embodiments, the photoelectric data corresponding to the detection item are corrected based on an interference situation indicated by the first state information, and a more accurate detection result is obtained by using the corrected photoelectric data.

In some other embodiments, an interferent information is obtained based on the first state information and the second state information, and the photoelectric data are corrected by using the interferent information, to obtain the detection result of the detection item. Detailed descriptions of the embodiment may refer to the above related descriptions, and are not elaborated here.

An embodiment of the invention further provides a sample analysis system. The sample analysis system includes a sample preparation device, a detection device, an image acquisition device, and a control device. Hereinafter, only the control device will be briefly described, descriptions of other components may refer to related descriptions in the above embodiments, and are not elaborated here.

The control device is configured to: process the to-be-detected sample to remove an interferent from the to-be-detected sample, when determining that the interferent is present in the to-be-detected sample based on the sample image of the to-be-detected sample; control the sample dispensing mechanism to dispense the processed to-be-detected sample into the reaction vessel; and obtain a detection result based on photoelectric data of the reaction solution.

In the sample analysis system of this technical solution, the to-be-detected sample may be processed first to remove the interferent when it is detected that the interferent is present in the to-be-detected sample, and it may be understood that a specific processing is related to the interferent type. After the to-be-detected sample in which the interference has been removed is obtained, the to-be-detected sample is detected to obtain the detection result. In a method for processing the interference, the to-be-detected sample is processed after the interference is found during the item detection, and the item detection is performed again. Compared to such method for processing the interference, the sample analysis system of this technical solution processes the interferent before detection, which can avoid repeated detection, reduce waste of reagents and other consumables in the item detection, and save the detection process.

An embodiment of the invention further provides a sample analysis system. The sample analysis system includes a sample preparation device, a detection device, and a control device. Compared to the sample analysis systems in the above embodiments, the sample analysis system in this embodiment does not necessarily include an image acquisition device, and the control device may acquire state information of the to-be-detected sample transmitted by other devices. Hereinafter, only the control device will be briefly described, descriptions of other components may refer to related descriptions in the above embodiments, and are not elaborated here.

The control device is configured to obtain first state information of the to-be-detected sample. In some embodiments, the first state information of the to-be-detected sample is information of an interferent that causes an abnormality in a characteristic of the to-be-detected sample. The control device is further configured to obtain second state information of a reaction solution and a detection result of a detection item for the to-be-detected sample based on photoelectric data; and determine an interferent information in the reaction solution based on the first state information in combination with the second state information. The first state information may be transmitted by another device or may be obtained by the control device itself.

The state information of the to-be-detected sample indicates an interference situation in the to-be-detected sample. In some embodiments, a sample image may be obtained by photographing the to-be-detected sample, and the state information may be obtained after the sample image is identified. In some embodiments, a serum index detection may be performed on the to-be-detected sample, and the state information may be obtained from the serum index. In some embodiments, the optical detection device may also be used to obtain photoelectric data of the to-be-detected sample, and an interference characteristic quantity of the photoelectric data may be analyzed to obtain the state information. Any other means for interference detection may also be used to obtain the state information of the to-be-detected sample.

An embodiment of the invention further provides a sample analysis system. The sample analysis system includes a sample preparation device, a detection device, and a control device.

The sample preparation device is configured to prepare a reaction solution using at least a portion of a to-be-detected sample and a reaction reagent.

The detection device is configured to detect the to-be-detected sample to obtain a first detection parameter, and detect the reaction solution to obtain a second detection parameter.

The first detection parameter refers to a parameter obtained by detecting an interferent in the to-be-detected sample, and the first detection parameter is used to obtain the first state information in the to-be-detected sample.

For example, the first detection parameter is obtained using an image processing technology, and correspondingly, the first detection parameter includes an image parameter. The to-be-detected sample (or a pretreatment solution of the to-be-detected sample) is photographed to obtain a sample image of the to-be-detected sample (or the pretreatment solution of the to-be-detected sample), the image parameter is obtained after analyzing the sample image, and the image parameter indicates the first state information of the to-be-detected sample. It may be understood that the image parameter may reflect a physical characteristic of the to-be-detected sample (such as a color, a turbidity, a precipitation, a lump, a floc, etc.), and the image parameter may include, but is not limited to a color, a pixel depth, a resolution, a bit depth, a color tone, a saturation, a brightness, a color channel, etc.

For another example, the first detection parameter is obtained using an optical analysis technology, and correspondingly, the first detection parameter includes photoelectric data. A specific process for obtaining the photoelectric data by detection using the optical analysis technology may refer to the above related descriptions about the light source component and the optical signal detector, and are not elaborated here. Further, the optical analysis technology may include a PDR technology, and the optoelectronic data include PDR optoelectronic data.

The second detection parameter refers to a parameter obtained by detecting an interferent in the reaction solution, and the second detection parameter is used to obtain the second state information in the reaction solution.

For example, the second detection parameter is obtained using an optical analysis technology, and the second detection parameter includes photoelectric data. In a specific implementation, the detection device includes a light source component and an optical signal detector. The light source component is configured to generate an irradiation light, the irradiation light forms an emission light after irradiating the reaction solution, and the optical signal detector acquires the emission light and converts the emission light into the photoelectric data. The second detection parameter includes the photoelectric data. In this implementation, the control device is configured to obtain the second state information in the reaction solution based on the photoelectric data included in the second detection parameter. Further, the optical analysis technology may include a PDR technology, and the optoelectronic data include PDR optoelectronic data.

The control device is configured to: obtain first state information of the to-be-detected sample based on the first detection parameter; obtain second state information of the reaction solution based on the second detection parameter; and determine an interferent information in the reaction solution, such as an interferent type or an interferent source, based on the first state information in combination with the second state information.

An embodiment of the invention further provides a sample analysis system. The sample analysis system includes a sample preparation device, a detection device, an image acquisition device, and a control device. Unlike the above embodiments, the image acquisition device is configured to acquire an image of a sample tube carrying the to-be-detected sample, so that the control device obtains a first interferent information of the sample tube based on the image of the sample tube, and the first interferent information includes a type of a chemical reagent contained in the sample tube. For example, the heparin is an anticoagulant, and an ethylenediaminetetraacetic acid (EDTA) is also an anticoagulant, etc.

Specifically, the image acquired by the image acquisition device may include an image of a cap of the sample tube for carrying the to-be-detected sample, and/or an image of a label on the sample tube for carrying the to-be-detected sample. In an actual application, the sample tube for carrying the sample may contain some substances such as chemical reagents, and these chemical reagents may react with substances in a reaction system such as the to-be-detected sample and the reaction reagent, thereby interfering with the detection result of the detection item. If it is determined based on the image of the sample tube that the sample tube may have impact on detection results of some detection items, the to-be-detected sample may be marked and an alarm for the sample tube may be activated.

In a specific case, the type of the chemical reagent in the sample tube may be determined by a color of the cap of the sample tube. For example, the sample tube with a green cap is a heparin tube carrying an anticoagulant, which may interfere with detection results of items such as an α-L-fucosidase (AFU) item and the CK item. The sample tube with a yellow cap carries a procoagulant, which may interfere with detection results of some detection items. In another case, a label is attached onto an outer wall of the sample tube, and a color of the label is usually consistent with the color of the cap, so the type of the chemical reagent in the sample tube may also be determined by the color of the label.

The control device may also obtain the second state information of the reaction solution based on the photoelectric data of the reaction solution, and the second state information includes a type of a chemical reagent that may cause an abnormality in the detection result of the detection item, such as a procoagulant, an anticoagulant, etc. In an actual application, interference relationships between detection items and types of chemical reagents may be set in advance, and which detection items will be affected by which types of chemical reagents may be determined through the interference relationships.

Further, the operation of determining the interferent information in the reaction solution, such as the interferent type or the interferent source, based on the first state information in combination with the second state information may specifically include that: it is determined that the interferent source in the detection item includes the sample tube, in response to the first interferent information and the second interferent information including a common type of chemical reagent.

In a specific embodiment, the detection item is a CK item, when the first interferent information and the second interferent information both include an anticoagulant, it is determined that an interferent source in the CK item includes the sample tube. In another specific embodiment, the detection item is an α-L-fucosidase item, when the first interferent information and the second interferent information both include an anticoagulant, it is determined that an interferent source in the α-L-fucosidase item includes the sample tube.

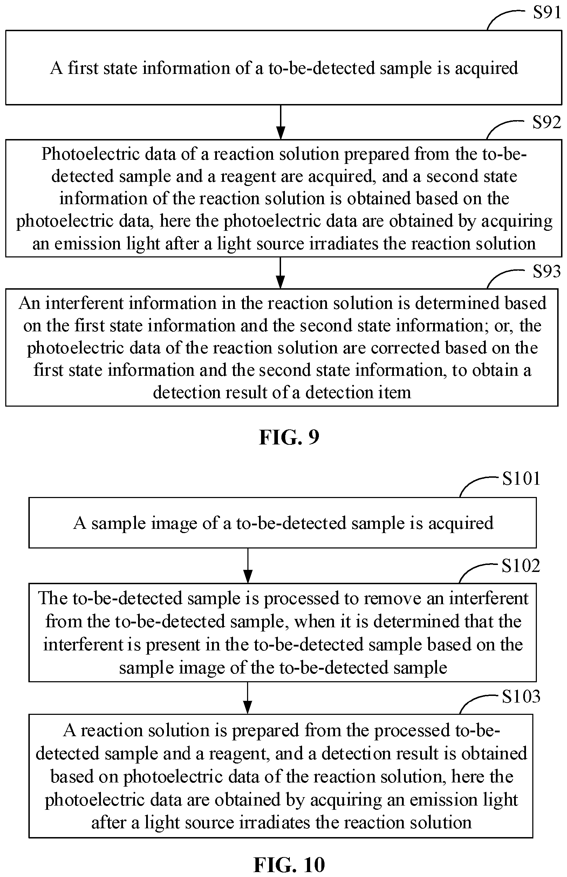

An embodiment of the invention further provides a sample analysis method, and as shown in FIG. 9, the sample analysis method includes the following operations S91 to S93.

In operation S91, first state information of a to-be-detected sample is acquired.

The state information of the to-be-detected sample is obtained by various interferent detection methods on the to-be-detected sample, such as an image recognition, a serum index detection, an optical detection, etc.

In operation S92, photoelectric data of a reaction solution prepared from the to-be-detected sample and a reagent is acquired, and second state information of the reaction solution is obtained based on the photoelectric data. The photoelectric data is obtained by acquiring an emission light after a light source irradiates the reaction solution.

In operation S93, an interferent information in the reaction solution is determined based on the first state information and the second state information; or, the photoelectric data of the reaction solution is corrected based on the first state information and the second state information, to obtain a detection result of a detection item.

In the embodiment, the interferent detection may be performed by using the state information of the to-be-detected sample and the state information of the reaction solution, to obtain an accurate interferent information in the reaction solution. Alternatively, the photoelectric data of the reaction solution may also be corrected by using the state information of the to-be-detected sample and the state information of the reaction solution, to obtain a more accurate item detection result. Specific descriptions may refer to the above related contents, and are not elaborated here.

An embodiment of the invention further provides a sample analysis method, and as shown in FIG. 10, the sample analysis method includes the following operations S101 to S103.

In operation S101, a sample image of a to-be-detected sample is acquired.

In operation S102, the to-be-detected sample is processed to remove an interferent from the to-be-detected sample, when it is determined that the interferent is present in the to-be-detected sample based on the sample image of the to-be-detected sample.

In operation S103, a reaction solution is prepared from the processed to-be-detected sample and a reagent, and a detection result is obtained based on photoelectric data of the reaction solution. The photoelectric data is obtained by acquiring an emission light after a light source irradiates the reaction solution.

In the sample analysis method of this technical solution, the to-be-detected sample may be processed first to remove the interferent when it is detected that the interferent is present in the to-be-detected sample, and it may be understood that a specific processing is related to the interferent type. After the to-be-detected sample in which the interference has been removed is obtained, the to-be-detected sample is detected to obtain the detection result. In a method for processing the interference, the to-be-detected sample is processed after the interference is found during the item detection, and the item detection is performed again. Compared to such method for processing the interference, the sample analysis method of this technical solution processes the interferent before detection, which may avoid repeated detection, reduce waste of reagents and other consumables in the item detection, and save the detection process.

With respect to the above descriptions of the disclosed embodiments, features described in each of the embodiments in the description may be replaced by each other or combined with each other, so that professional technicians in the art may implement or use the invention. The invention is described with reference to various exemplary embodiments. However, it will be appreciated by those skilled in the art that variations and modifications may be made to the exemplary embodiments without departing from the scope of the invention. For example, various operational steps as well as components configured to perform the operational steps may be implemented in different ways, depending on a particular application or considering any number of cost functions associated with operations of the system (for example, one or more operations may be deleted, modified or combined into other operations).

Terms "first", "second" or the like in the description and claims of the invention and the above drawings are intended to distinguish different objects, and are not intended to describe a specific order. Furthermore, terms "including (comprising)", "having" and any variation thereof are intended to cover a non-exclusive inclusion. For example, a process, method, system, product or device including a series of steps or units is not limited to the listed steps or units, and optionally may further include steps or units which are not listed, or optionally further includes other steps or units inherent to the process, method or device.

Furthermore, as understood by those skilled in the art, the principle of the invention may be reflected in a computer program product on a computer-readable storage medium preloaded with computer-readable program codes. Any tangible, non-transitory computer-readable storage medium may be used, including a magnetic storage device (a hard disk, a floppy disk, etc.), an optical storage device (a Compact Disc Read-Only Memory (CD-ROM), a Digital Versatile Disk (DVD), a Blu Ray disk, etc.), a flash memory, and/or the like. The computer program instructions may be loaded onto a general purpose computer, a special purpose computer or other programmable data processing devices to form a machine, so that these instructions executed on the computer or other programmable data processing devices may generate a means for implementing specified functions. These computer program instructions may also be stored in computer-readable memory, which may instruct the computer or other programmable data processing devices to operate in a specific manner, so that the instructions stored in the computer-readable memory may form an article of manufacture including a means for implementing specified functions. The computer program instructions may also be loaded onto the computer or other programmable data processing devices to perform a series of operational steps on the computer or other programmable devices to produce a computer-implemented process, so that the instructions executed on the computer or other programmable devices may provide operations for implementing specified functions.

The foregoing specific descriptions have been described with reference to various embodiments. However, it will be appreciated by those skilled in the art that modifications and variations may be made without departing from the scope of the invention. Therefore, the invention will be considered in an explanatory way rather than a restrictive way, and all these modifications will be included in the scope thereof. Similarly, advantages of various embodiments, other advantages, and solutions to problems have been described above. However, benefits, advantages, solutions to problems, any element which may generate them, or solutions make them clearer, should not be explained as being critical, necessary or essential. A term "including" and any other variant thereof as used herein belong to a non-exclusive inclusion, so that a process, method, article or device including a list of elements includes not only these elements, but also other elements which are not clearly listed or do not belong to the process, method, system, article or device. Furthermore, a term "coupling" and any other variant thereof as used herein refers to a physical connection, an electrical connection, a magnetic connection, an optical connection, a communication connection, a functional connection, and/or any other connections.

The above embodiments only describe several implementations, and they are specifically described in detail, however, they cannot be explained as limiting the patent scope of the invention. It should be pointed out that several modifications and improvements may also be made by those of ordinary skill in the art without departing from the concept of the invention, all of which fall within the scope of protection of the invention. Therefore, the scope of protection of the invention shall be subject to the scope of protection of the appended claims.

## Claims

1. A sample analysis system, comprising:
a sample preparation device, configured to prepare a reaction solution using at least a portion of a to-be-detected sample and a reaction reagent;
a detection device, comprising a light source component and an optical signal detector, wherein the light source component is configured to generate an irradiation light, the irradiation light forms a first emission light after irradiating the reaction solution, and the optical signal detector acquires the first emission light to obtain photoelectric data;
an image acquisition device, configured to acquire a sample image of the to-be-detected sample; and
a control device, configured to determine first state information of the to-be-detected sample based on the sample image of the to-be-detected sample, obtain second state information of the reaction solution and a detection result of a detection item for the to-be-detected sample based on the photoelectric data, and determine an interferent information in the reaction solution based on the first state information in combination with the second state information.

2. The sample analysis system of claim 1, wherein the sample preparation device comprises:
a reaction device, provided with at least one reaction site where a reaction vessel is arranged;
a sample dispensing mechanism, configured to dispense the portion of the to-be-detected sample into the reaction vessel; and
a reagent dispensing mechanism, configured to dispense the reaction reagent into the reaction vessel,
the reaction vessel is provided to prepare the reaction solution from the to-be-detected sample and the reaction reagent, wherein,
when the reaction vessel is kept stationary relative to the light source component, the irradiation light forms the first emission light after irradiating a same position of the reaction solution in the reaction vessel, and the first emission light comprises at least two optical signals with different wavelengths; and/or, when the reaction vessel rotates relative to the light source component, the irradiation light forms the first emission light after continuous irradiation of the reaction solution in the reaction vessel, and the first emission light comprises at least two optical signals with different wavelengths;
the optical signal detector is configured to convert the at least two optical signals with different wavelengths into the photoelectric data, and the photoelectric data comprise signal sequences formed by relationships between acquisition moments and intensities of the at least two optical signals with different wavelengths.

3. The sample analysis system of claim 1 or 2, wherein
the irradiation light forms a second emission light after irradiating the reaction reagent, and the optical signal detector is further configured to acquire the second emission light and convert the second emission light into second photoelectric data;
the control device is further configured to: obtain a third state information of the reaction reagent based on the second photoelectric data; and determine the interferent information in the reaction solution based on the first state information in combination with the second state information and the third state information;
the optical signal detector acquires the second emission light after the reaction reagent is dispensed and before the to-be-detected sample is dispensed.

4. The sample analysis system of claim 1, wherein the control device is further configured to:
input the sample image into a first preset machine learning model, and acquire the first state information of the to-be-detected sample outputted by the first machine learning model;
or,
input the sample image into a second preset machine learning model, acquire an image serum index of the to-be-detected sample outputted by the second machine learning model, and obtain the first state information of the to-be-detected sample based on the image serum index.

5. The sample analysis system of claim 1, wherein the interferent information comprises an interferent source or an interferent type.

6. The sample analysis system of claim 5, wherein
the first state information comprises a first turbidity value of the to-be-detected sample, and the second state information comprises a second turbidity value of the reaction solution;
or,
the first state information comprises a clear/turbid state of the to-be-detected sample, and the second state information comprises a clear/turbid state of the reaction solution;
or,
the first state information comprises a clear/turbid state of the to-be-detected sample, and the second state information comprises an interferent type of an interferent in the reaction solution, and the control device is further configured to: determine the interferent type as a lipemia interference, in response to the clear/turbid state of the to-be-detected sample being turbid and at least one interferent type in the reaction solution comprising the lipemia interference; or determine the interferent type of the interferent in the reaction solution based on an interferent type corresponding to the detection item for the to-be-detected sample, in response to the clear/turbid state of the to-be-detected sample being clear;
or,
the first state information comprises a first group of interferent types in the to-be-detected sample, and the second state information comprises a second group of interferent types in the reaction solution, and the control device is further configured to: determine a common interferent type between the first group of interferent types and the second group of interferent types as the interferent type in the reaction solution.

7. The sample analysis system of claim 6, wherein
the detection item is a creatinine item, the interferent type in the second state information comprises a globulin interference and the lipemia interference, and the control device is further configured to: determine the interferent type in the reaction solution as the globulin interference;
or,
the detection item is a Creatine Kinase (CK) item, the interferent type in the second state information comprises a heparin interference and the lipemia interference, and the control device is further configured to: determine the interferent type in the reaction solution as the heparin interference.

8. The sample analysis system of claim 1, wherein the control device is further configured to:
extract at least one characteristic interference quantity from the photoelectric data, and obtain the second state information of the reaction solution based on the at least one characteristic interference quantity;
or,
input the photoelectric data into a third preset machine learning model, and acquire the second state information of the reaction solution outputted by the third machine learning model.

9. The sample analysis system of claim 1, wherein the control device is further configured to:
determine, from the photoelectric data, photoelectric data corresponding to a detection wavelength for the detection item and photoelectric data corresponding to an interference wavelength of an interferent, wherein the interferent is determined by the interferent information; correct the photoelectric data corresponding to the detection wavelength based on the photoelectric data corresponding to the interference wavelength; and obtain the detection result of the detection item based on the corrected photoelectric data corresponding to the detection wavelength;
or,
determine, from the photoelectric data, photoelectric data corresponding to a detection wavelength for the detection item and photoelectric data corresponding to an interference wavelength of an interferent, wherein the interferent is determined by the interferent information; determine an initial detection result based on the photoelectric data corresponding to the detection wavelength; determine an interference quantity caused by the interferent based on the photoelectric data corresponding to the interference wavelength; and correct the initial detection result based on the interference quantity, to obtain the detection result of the detection item.

10. A sample analysis system, comprising:
a sample preparation device, configured to prepare a reaction solution using at least a portion of a to-be-detected sample and a reaction reagent;
a detection device, comprising a light source component and an optical signal detector, wherein the light source component is configured to generate an irradiation light, the irradiation light forms a first emission light after irradiating the reaction solution, and the optical signal detector acquires the first emission light to obtain photoelectric data;
an image acquisition device, configured to acquire a sample image of the to-be-detected sample in a sample vessel; and
a control device, configured to determine first state information of the to-be-detected sample based on the sample image of the to-be-detected sample, obtain second state information of the reaction solution based on the photoelectric data, correct the photoelectric data based on the first state information in combination with the second state information, and obtain a detection result of a detection item for the to-be-detected sample based on the corrected photoelectric data.

11. The sample analysis system of claim 10, wherein the first state information of the to-be-detected sample is information of an interferent that causes an abnormality in a characteristic of the to-be-detected sample.

12. A sample analysis system, comprising:
a sample preparation device, configured to prepare a reaction solution using at least a portion of a to-be-detected sample in a sample tube and a reaction reagent;
a detection device, comprising a light source component and an optical signal detector, wherein the light source component is configured to generate an irradiation light, the irradiation light forms a first emission light after irradiating the reaction solution, and the optical signal detector acquires the first emission light to obtain photoelectric data;
an image acquisition device, configured to acquire an image of the sample tube carrying the to-be-detected sample; and
a control device, configured to: obtain a first interferent information caused by the sample tube based on the image of the sample tube; obtain a second interferent information in the reaction solution and a detection result of a detection item for the to-be-detected sample based on the photoelectric data; and determine an interferent source in the detection item based on the first interferent information in combination with the second interferent information.

13. The sample analysis system of claim 12, wherein the first interferent information comprises a type of chemical reagent contained in the sample tube, and the second interferent information comprises a type of chemical reagent that may cause an abnormality in the detection result of the detection item, and the control device is further configured to:
determine that the interferent source in the detection item comprises the sample tube, in response to the first interferent information and the second interferent information comprising a same type of chemical reagent.

14. The sample analysis system of claim 13, wherein the image of the sample tube comprises an image reflecting a color of a cap of the sample tube and/or an image reflecting a color of a label on the sample tube, and the control device is configured to determine the type of chemical reagent contained in the sample tube based on the color of the cap and/or the color of the label.

15. A sample analysis method, comprising:
acquiring first state information of a to-be-detected sample;
acquiring photoelectric data of a reaction solution prepared from the to-be-detected sample and a reagent, and obtaining second state information of the reaction solution based on the photoelectric data, wherein the photoelectric data is obtained by acquiring an emission light after a light source irradiates the reaction solution; and
determining an interferent information in the reaction solution based on the first state information and the second state information; or, correcting the photoelectric data of the reaction solution based on the first state information and the second state information, to obtain a detection result of a detection item.
